(19) Europäisches Patentamt
European Patent Office
Office européen des brevets

(11) **EP 4 394 952 A1**

(12) **EUROPEAN PATENT APPLICATION**

(43) Date of publication:
**03.07.2024   Bulletin 2024/27**

(21) Application number: **23183208.0**

(22) Date of filing: **04.07.2023**

(51) International Patent Classification (IPC):
**H01M 4/66** *(2006.01)*        **H01M 4/131** *(2010.01)*
**H01M 4/525** *(2010.01)*       **H01M 10/0525** *(2010.01)*
**H01M 4/62** *(2006.01)*

(52) Cooperative Patent Classification (CPC):
**H01M 4/661; H01M 4/131; H01M 4/525;
H01M 4/663; H01M 4/667; H01M 10/0525;
H01M 4/625**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **26.12.2022   KR 20220184918**

(71) Applicant: **Samsung SDI Co., Ltd.
Yongin-si, Gyeonggi-do 17084 (KR)**

(72) Inventors:
• **KO, Youngsan
  17084 Yongin-si (KR)**
• **OH, Songyul
  17084 Yongin-si (KR)**
• **CHOI, Kyuhwan
  17084 Yongin-si (KR)**
• **LEE, Junsik
  17084 Yongin-si (KR)**
• **KIM, Jaehyuk
  17084 Yongin-si (KR)**

(74) Representative: **Marks & Clerk LLP
15 Fetter Lane
London EC4A 1BW (GB)**

(54) **POSITIVE ELECTRODE CURRENT COLLECTOR FOR RECHARGEABLE LITHIUM BATTERY, POSITIVE ELECTRODE, AND RECHARGEABLE LITHIUM BATTERY INCLUDING SAME**

(57)     Disclosed are a positive electrode current collector for a rechargeable lithium battery, a positive electrode including the same, and a rechargeable lithium battery. The current collector for a positive electrode of a rechargeable lithium battery includes a substrate and a primer layer on the substrate, wherein the primer layer includes carbon nanotubes having a length of about 30 $\mu$m to about 200 $\mu$m, and a thickness of the primer layer is less than or equal to about 1 $\mu$m and greater than 0 $\mu$m.

FIG. 7

EP 4 394 952 A1

**Description**

## BACKGROUND OF THE INVENTION

### (a) Field of the Invention

A positive electrode current collector for a rechargeable lithium battery, a positive electrode, and a rechargeable lithium battery including the same are disclosed.

### (b) Description of the Related Art

Recently, a rechargeable battery has been drawing lots of attention as an energy source. Particularly, a rechargeable lithium battery with high energy density and discharge voltage have already been commercialized and widely used, but efforts to improve their performance are continuously made.

A positive electrode for the rechargeable lithium battery includes a current collector and a positive electrode active material layer formed on the current collector, wherein a conductive material is added to the positive electrode active material layer in order to apply conductivity to the positive electrode. However, when the conductive material is added to the positive electrode active material layer, since the more the conductive material is added, the less the positive electrode active material is used, the conductivity and density are in a trade-off relationship.

## SUMMARY OF THE INVENTION

A positive electrode current collector for a rechargeable lithium battery capable of increasing a density of a positive electrode, lowering resistance, and improving mechanical properties; a positive electrode including the same; and a rechargeable lithium battery are provided.

In an embodiment, a primer layer including carbon nanotubes is introduced between the current collector and the positive electrode active material layer, but a length of the carbon nanotubes and a thickness of the primer layer are each limited to a specific range.

Other embodiments provide a positive electrode and a rechargeable lithium battery including the positive electrode current collector.

At least some of the above and other features of the invention are set out in the claims.

The positive electrode current collector for a rechargeable lithium battery according to an embodiment can increase a density of the positive electrode, lower resistance, and improve mechanical properties, thereby contributing to improving electrochemical characteristics of the rechargeable lithium battery.

## BRIEF DESCRIPTION OF THE DRAWINGS

FIG. 1 is a schematic view showing a portion of a positive electrode current collector according to an embodiment.
FIG. 2 is a schematic view showing a portion of an anode (positive electrode) according to an embodiment.
FIG. 3 is an exploded perspective view of a rechargeable lithium battery according to an embodiment.
FIG. 4 is an SEM image of a cut surface of the positive electrode of Comparative Example 2, and FIG. 5 is a 1.5-fold magnified view of FIG. 4.
FIG. 6 is a SEM image of a cut surface of the anode (positive electrode) of Example 2, and FIG. 7 is a 1.5-fold magnified view of FIG. 6.

## DETAILED DESCRIPTION OF THE EMBODIMENTS

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present invention. The singular expression includes the plural expression unless the context clearly dictates otherwise.

The term "combination thereof" means a mixture, laminate, composite, copolymer, alloy, blend, reaction product, and the like of the constituents.

It should be understood that terms such as "comprises," "includes," or "have" are intended to designate the presence of an embodied feature, number, step, element, or a combination thereof, but it does not preclude the possibility of the presence or addition of one or more other features, numbers, steps, elements, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

In the present disclosure, when particles are spherical, "diameter" indicates a particle diameter or an average particle diameter, and when the particles are non-spherical, the "diameter" indicates a major axis length or an average major axis length. The diameter (or size) of the particles may be measured utilizing a scanning electron microscope or a particle size analyzer. As the particle size analyzer, for example, HORIBA, LA-950 laser particle size analyzer, may be utilized. When the size of the particles is measured utilizing a particle size analyzer, the average particle diameter (or size) is referred to as D50. D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size.

"Length" means a straight-line distance in a direction where the distance from one end to the other is relatively long. Also, depending on context, the length may refer to an average length (or size), e.g., the average length (or size) of nanotubes whose cumulative volume corresponds to 50 vol% in the nanotube length (or size distribution (e.g., cumulative distribution), and refers to the value of the nanotube length (or size) corresponding to 50% from the smallest nanotube when the total number of nanotubes is 100% in the distribution curve accumulated in the order of the smallest nanotube length (or size) to the largest nanotube length (or size).

"Thickness" may be measured through a thickness measurer or a photograph taken with an optical microscope such as a scanning electron microscope.

"Weight average molecular weight (Mw)" may be a value in terms of polystyrene as a standard, as measured by gel permeation chromatography (GPC).

"Viscosity-average Molecular Weight (Mv)" is measured by dissolving the polymer pellet in methylene chloride and measuring an intrinsic viscosity [η] of the obtained filtrate at 20 °C using an Uberode-type viscous tube and is calculated using Schnell's Equation.

$$[\eta] = 1.23 \times 10^{-5} \times Mv^{0.83}$$

### (Positive Electrode Current Collector for Rechargeable Lithium Battery)

In an embodiment, a positive electrode current collector for a rechargeable lithium battery includes a substrate and a primer layer on the substrate, wherein the primer layer includes carbon nanotubes having a length of about 30 μm to about 200 μm, and a thickness of the primer layer is less than or equal to about 1 μm (however, greater than 0 μm).

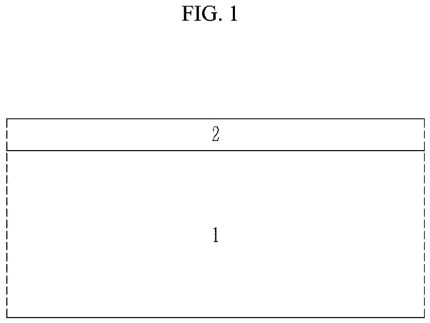

FIG. 1 is a schematic view showing a portion of a positive electrode current collector according to an embodiment. Specifically, FIG. 1 shows the positive electrode current collector for a rechargeable lithium battery according to an embodiment viewed in the thickness direction, only between both ends marked by a dotted line. For reference the primer layer has a thickness corresponding to about 3% or less of a total thickness of a positive electrode including the positive electrode current collector for a rechargeable lithium battery according to an embodiment. However, in FIG. 1, the primer layer is illustrated to be thicker than the ratio in order to emphasize the presence of the primer layer.

In the positive electrode current collector for a rechargeable lithium battery, a primer layer 2 is disposed on at least one surface of a substrate 1, and components constituting the primer layer 2 have conductivity. Accordingly, the primer layer separately having conductivity from the positive electrode active material layer is introduced into the positive electrode including the positive electrode current collector of an embodiment, not affecting an amount of the positive electrode active material but reducing resistance in the positive electrode active material layer.

Furthermore, the positive electrode current collector for a rechargeable lithium battery according to an embodiment uses carbon nanotubes having a length of about 30 μm to about 200 μm, when carbon nanotubes having a length of less than 30 μm are used, increasing mechanical properties (tensile strength, elongation, etc.) as well as much more significantly reducing the resistance.

These effects may be achieved, even when the primer layer is formed to have a thin thickness of less than or equal to about 1 μm (however, greater than about 0 μm). Accordingly, when the positive electrode current collector for a rechargeable lithium battery according to an embodiment is used, instead of providing the primer layer to have a thin thickness of less than or equal to about 1 μm, the positive electrode active material layer formed thereon may be formed to be significantly thick as much, realizing a high-capacity positive electrode.

Comprehensively, the positive electrode current collector for a rechargeable lithium battery according to an embodiment may not only increase density of the positive electrode but also reduce the resistance and increase the mechanical properties, contributing to improving electrochemical characteristics of a rechargeable lithium battery.

Hereinafter, the positive electrode current collector for a rechargeable lithium battery according to an embodiment is described in detail.

[Substrate]

The substrate is a site where electrons move in the electrochemical reaction of the active material, and is generally made to have a thickness of about 3 $\mu$m to about 500 $\mu$m.

The substrate is not particularly limited as long as it does not cause chemical change in the battery and has high conductivity, and an aluminium foil, a nickel foil, and the like can be used. For example, aluminium foil may be used as in examples described later.

[Primer Layer]

Carbon Nanotubes (CNT)

The carbon nanotubes basically have low resistance and high tensile strength, compared with amorphous carbon (e.g., acetylene black), wherein the longer, the lower the resistance and the higher the mechanical properties (tensile strength, elongation, etc.).

In particular, the carbon nanotubes have a length of about 30 $\mu$m or more, wherein the longer, the more reduced resistance and more improved mechanical properties. However, when the carbon nanotubes have a length of greater than about 200 $\mu$m, wherein as the carbon nanotubes are longer, there are no effects of reducing the resistance and increasing the mechanical properties. Accordingly, the positive electrode current collector for a rechargeable lithium battery according to an embodiment uses carbon nanotubes with a length of greater than or equal to about 30 $\mu$m, greater than or equal to about 40 $\mu$m, or greater than or equal to about 50 $\mu$m and less than or equal to about 200 $\mu$m. In particular, carbon nanotubes with a length of greater than or equal to about 50 $\mu$m and less than or equal to about 200 $\mu$m have significantly excellent effects. In a further example, the positive electrode current collector for a rechargeable lithium battery according to an embodiment uses carbon nanotubes with a length of greater than or equal to about 30 $\mu$m, greater than or equal to about 40 $\mu$m, or greater than or equal to about 50 $\mu$m and less than or equal to about 150 $\mu$m. In an even further example, the positive electrode current collector for a rechargeable lithium battery according to an embodiment uses carbon nanotubes with a length of greater than or equal to about 30 $\mu$m, greater than or equal to about 40 $\mu$m, or greater than or equal to about 50 $\mu$m and less than or equal to about 100 $\mu$m.

The longer carbon nanotubes achieve the more increased mechanical properties, which may be due to an increase in crystallinity. Specifically, when the carbon nanotubes have a length of greater than or equal to about 30 $\mu$m, greater than or equal to about 40 $\mu$m, or greater than or equal to about 50 $\mu$m and less than or equal to about 200 $\mu$m (or greater than or equal to about 30 $\mu$m, greater than or equal to about 40 $\mu$m, or greater than or equal to about 50 $\mu$m and less than or equal to about 150 $\mu$m; or greater than or equal to about 30 $\mu$m, greater than or equal to about 40 $\mu$m, or greater than or equal to about 50 $\mu$m and less than or equal to about 100 $\mu$m), crystallinity (Id/Ig) thereof may be greater than or equal to about 0.45, greater than or equal to about 0.7, greater than or equal to about 0.85, greater than or equal to about 1.1, or greater than or equal to about 1.15, less than or equal to about 1.6, less than or equal to about 1.3, or less than or equal to about 1.16. Herein, the 'crystallinity' is Id/Ig measured with a Raman spectroscope, and in the Raman spectrum analysis, intensity (Ig) of a peak (G, about 1580 cm$^{-1}$) and intensity (Id) of another peak (D, about 1350 cm$^{-1}$) are measured to calculate a ratio (R=Id/Ig).

The carbon nanotubes may be arranged in a horizontal direction in relation to the surface of the substrate. When the carbon nanotubes are horizontally arranged with the surface of the substrate, compared with when the carbon nanotubes are vertically arranged with the surface of the substrate, even though the primer layer is formed to have a thin thickness, a positive electrode with low resistance and high strength may be realized, and accordingly, the positive electrode active material layer may be formed to be sufficiently thick as much to realize a high-capacity positive electrode.

A content of the carbon nanotubes in the total amount of the primer layer may be greater than 0 wt% and less than or equal to about 90 wt% or less than or equal to about 80 wt%. In an example, a content of the carbon nanotubes in the total amount of the primer layer may be greater than 60 wt% and less than or equal to about 90 wt% or less than or equal to about 80 wt%. In a further example, a content of the carbon nanotubes in the total amount of the primer layer may be greater than 70 wt% and less than or equal to about 90 wt% or less than or equal to about 80 wt%.

Dispersant

The primer layer may further include a dispersant. The dispersant is not particularly limited as long as it is a material that functions to uniformly disperse the carbon nanotubes on the surface of the substrate, but may include at least one selected from a hydrogenated nitrile butadiene rubber, polyvinylpyrrolidone, polyvinylidene fluoride, a styrene-butadiene rubber, an acrylated styrene-butadiene rubber, an organic compound having a basic functional group, and an amine-based compound.

In particular, when the hydrogenated nitrile butadiene rubber and polyvinylpyrrolidone are mixed and used as the dispersant, it functions as an impact absorber as well as a dispersing function, thereby suppressing damage to the substrate during a manufacturing process of the positive electrode (particularly, the active material coating process). In addition, a stable rechargeable lithium battery can be easily implemented even in a high voltage environment.

When using a mixture of the hydrogenated nitrile butadiene rubber and polyvinylpyrrolidone as the dispersant, they may be mixed in a weight ratio of about 10:90 to about 90:10, about 20:80 to about 80:20, or about 30:70 to about 70:30.

A content of the dispersant in the total amount of the primer layer may be greater than 0 wt% and less than or equal to about 50 wt% or less than or equal to about 40 wt%. In an example, a content of the dispersant in the total amount of the primer layer may be greater than 20 wt% and less than or equal to about 50 wt% or less than or equal to about 40 wt%. In a further example, a content of the dispersant in the total amount of the primer layer may be greater than 30 wt% and less than or equal to about 50 wt% or less than or equal to about 40 wt% .

In addition, in the primer layer, a weight ratio of the carbon nanotubes and the dispersant is about 95:5 to about 50:50, about 90:10 to about 55:45, about 80:20 to about 60:40, or about 70:30 to about 60:40. The dispersant, regardless of its type, can sufficiently exhibit its function when the content in the total amount of the primer layer and the weight ratio with the carbon nanotubes satisfy the above ranges.

Primer Layer

The primer layer may have a thickness of less than or equal to about 1 $\mu$m (however, greater than 0 $\mu$m). In an example, the primer layer may have a thickness of less than or equal to about 1 $\mu$m and greater than 0.1 $\mu$m. In an example, the primer layer may have a thickness of less than or equal to about 1 $\mu$m and greater than 0.5 $\mu$m. In this way, even though the primer layer is formed to have a thin thickness, a positive electrode with low resistance and high strength may be realized, and accordingly, the positive electrode active material layer may be formed to be sufficiently thick as much, realizing a high-capacity positive electrode.

On the other hand, even though the primer layer includes no other materials (e.g., binder) in addition to the dispersant, the carbon nanotubes may be well attached to the current collector.

**(Positive Electrode for Rechargeable Lithium Battery)**

Another embodiment provides a positive electrode for a rechargeable lithium battery including the positive electrode current collector of the aforementioned embodiment and further including a positive electrode active material layer on the primer layer.

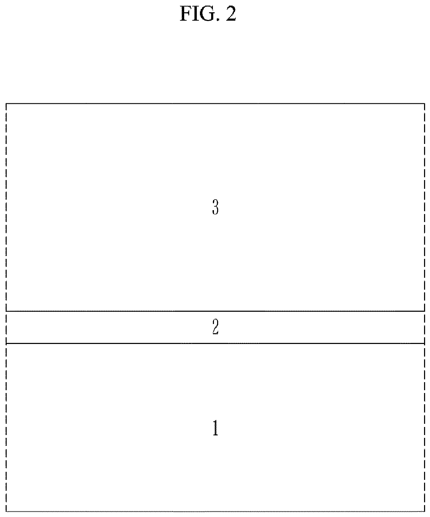

FIG. 2 is a schematic view showing a portion of a positive electrode according to an embodiment. Specifically, FIG. 2 shows the positive electrode of an embodiment viewed in the thickness direction, only between both ends thereof marked by a dotted line. For reference, the primer layer may have a thin thickness corresponding to less than or equal to about 3% of a total thickness of the positive electrode of an embodiment. However, in FIG. 2, in order to emphasize the presence of the primer layer, the primer layer is illustrated thicker than the ratio.

In the positive electrode current collector for a rechargeable lithium battery according to an embodiment, a primer layer 2 and a positive electrode active material layer 3 are sequentially disposed on at least one surface of a substrate 1.

Hereinafter, the positive electrode for a rechargeable lithium battery is described in detail.

[Current Collector]

The positive electrode of an embodiment uses the positive electrode current collector of the aforementioned embodiment.

Primer Layer

As mentioned above, the primer layer may have a thickness of less than or equal to about 1 $\mu$m (however,

greater than 0 μm). For example, the primer layer may have a thickness of less than or equal to about 1 μm and greater than 0.1 μm, or less than or equal to about 1 μm and greater than 0.5 μm. When considering the total thickness (of the positive electrode) as 100%, the thickness of the primer layer may occupy less than or equal to about 3% (however, greater than 0%). In an example, the thickness of the primer layer may occupy less than or equal to about 2% and greater than 0.1%. In a further example, the thickness of the primer layer may occupy less than or equal to about 1.5% and greater than 0.5%.

In this way, even though the primer layer is formed to have a thin thickness, a positive electrode with low resistance and high strength may be realized, and accordingly, the positive electrode active material layer to be sufficiently thick as much, realizing a high-capacity positive electrode.

In addition, description of the positive electrode current collector is the same as above.

[Positive Electrode Active Material Layer]

The positive electrode active material layer includes a positive electrode active material, and may optionally further include a conductive material, a binder, and the like.

Positive Electrode Active Material

The positive electrode active material may include lithiated intercalation compounds that reversibly intercalate and deintercalate lithium ions. Examples of the cathode active material include a compound represented by any one of the following chemical formulas:

$Li_aA_{1-b}X_bD_2$ (0.90 ≤ a ≤ 1.8, 0 ≤ b ≤ 0.5);
$Li_aA_{1-b}X_bO_{2-c}D_c$ (0.90 ≤ a ≤ 1.8, 0 ≤ b ≤ 0.5, 0 ≤ c ≤ 0.05);
$Li_aE_{1-b}X_bO_{2-c}D_c$ (0.90 ≤ a ≤ 1.8, 0 ≤ b ≤ 0.5, 0 ≤ c ≤ 0.05);
$Li_aE_{2-b}X_bO_{4-c}D_c$ (0.90 ≤ a ≤ 1.8, 0 ≤ b ≤ 0.5, 0 ≤ c ≤ 0.05);
$Li_aNi_{1-b-c}Co_bX_cD_\alpha$ (0.90 ≤ a ≤1.8, 0 ≤ b ≤ 0.5, 0 ≤ c ≤ 0.5, 0 < α ≤ 2);
$Li_aNi_{1-b-c}Co_bX_cO_{2-a}T_\alpha$ (0.90 ≤ a ≤ 1.8, 0 ≤ b ≤ 0.5, 0 ≤ c ≤ 0.05, 0 < α < 2);
$Li_aNi_{1-b-c}Co_bX_cO_{2-\alpha}T_2$ (0.90 ≤ a ≤ 1.8, 0 ≤ b ≤ 0.5, 0 ≤ c ≤ 0.05, 0 < α < 2);
$Li_aNi_{1-b-c}Mn_bX_cD_\alpha$ (0.90 ≤ a ≤ 1.8, 0 ≤ b ≤ 0.5, 0 ≤ c ≤ 0.05, 0 < α ≤ 2);
$Li_aNi_{1-b-c}Mn_bX_cO_{2-\alpha}T_\alpha$ (0.90 ≤ a ≤ 1.8, 0 ≤ b ≤ 0.5, 0 ≤ c ≤ 0.05, 0 < α < 2);
$Li_aNi_{1-b-c}Mn_bX_cO_{2-\alpha}T_2$ (0.90 ≤ a ≤ 1.8, 0 ≤ b ≤ 0.5, 0 ≤ c ≤ 0.05, 0 < α < 2);
$Li_aNi_bE_cGdO_2$ (0.90 ≤ a ≤ 1.8, 0 ≤ b ≤ 0.9, 0 ≤ c ≤ 0.5, 0.001 ≤ d ≤ 0.1);
$Li_aNi_bCo_cMn_dG_eO_2$ (0.90 ≤ a ≤ 1.8, 0 ≤ b ≤ 0.9, 0 ≤ c ≤ 0.5, 0 ≤ d ≤0.5, 0.001 ≤ e ≤ 0.1);
$Li_aNiG_bO_2$ (0.90 ≤ a ≤ 1.8, 0.001 ≤ b ≤ 0.1);
$Li_aCoG_bO_2$ (0.90 ≤ a ≤ 1.8, 0.001 ≤ b ≤ 0.1);
$Li_aMn_{1-b}G_bO_2$ (0.90 ≤ a ≤ 1.8, 0.001 ≤ b ≤ 0.1);
$Li_aMn_2G_bO_4$ (0.90 ≤ a ≤ 1.8, 0.001 ≤ b ≤ 0.1);
$Li_aMn_{1-g}G_gPO_4$ (0.90 ≤ a ≤ 1.8, 0 ≤ g ≤ 0.5);
$QO_2$; $QS_2$; $LiQS_2$;
$V_2O_5$; $LiV_2O_5$;
$LiZO_2$;
$LiNiVO_4$;
$Li_{(3-f)}J_2(PO_4)_3$ (0 ≤ f ≤ 2);
$Li_{(3-f)}Fe_2(PO_4)_3$ (0 ≤ f ≤ 2);
$Li_aFePO_4$ (0.90 ≤ a ≤ 1.8).

In the above chemical formulas, A is selected from Ni, Co, Mn, and a combination thereof; X is selected from Al, Ni, Co, Mn, Cr, Fe, Mg, Sr, V, a rare earth element, and a combination thereof; D is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof.

The compounds may have a coating layer on the surface, or may be mixed with another compound having a coating layer. The coating layer may include at least one coating element compound selected from an oxide of a coating element, a hydroxide of a coating element, an oxyhydroxide of a coating element, an oxycarbonate of a coating element, and a hydroxy carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a combination thereof. A method of providing the coating layer may be a method that does not adversely affect physical properties of the positive electrode active material, for example, spray coating, dipping, and the like.

Specifically, the positive electrode active material may include a composite oxide of cobalt, manganese, nickel, aluminium, iron, or a combination thereof and lithium, and may include, for example, a lithium cobalt composite oxide represented by Chemical Formula 1.

$$[\text{Chemical Formula 1}] \qquad Li_{a1}CO_{x1}M^1_{y1}O_2$$

In Chemical Formula 1, $0.9 \leq a1 \leq 1.8$, $0.3 \leq x1 \leq 1$, $0 \leq y1 \leq 0.7$, and $M^1$ is selected from Al, B, Ce, Co, Cr, F, Mg, Mn, Mo, Nb, P, S, Si, Sr, Ti, V, W, Zr, and a combination thereof.

The positive electrode active material may be, for example, $LiCoO_2$.

The positive electrode active material may be, for example, lithium nickel cobalt aluminium oxide.

Conductive Material

The conductive material imparts conductivity to the electrode, and examples thereof may include carbon nanotubes, nano carbon, natural graphite, artificial graphite, carbon black, a carbon fiber, a metal powder, and a metal fiber, but are not limited thereto. These may be used alone or as a mixture of two or more. The metal powder and the metal fiber may use a metal of copper, nickel, aluminium, silver, and the like. In an example, the conductive material may be carbon nanotubes and nano carbon.

Binder

The binder improves binding properties of positive electrode active material particles with one another and with a current collector, and specific examples may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto. These may be used alone or as a mixture of two or more. In an example, the binder may be polyvinylidene fluoride.

**(Rechargeable Lithium Battery)**

Another embodiment provides a rechargeable lithium battery including the positive electrode of the aforementioned embodiment.

Since the positive electrode of the aforementioned embodiment has characteristics such as high density, low resistance, and high strength, it contributes to improving the electrochemical characteristics of the rechargeable lithium battery.

Hereinafter, the rechargeable lithium battery is described in detail, except for overlapping descriptions with the foregoing.

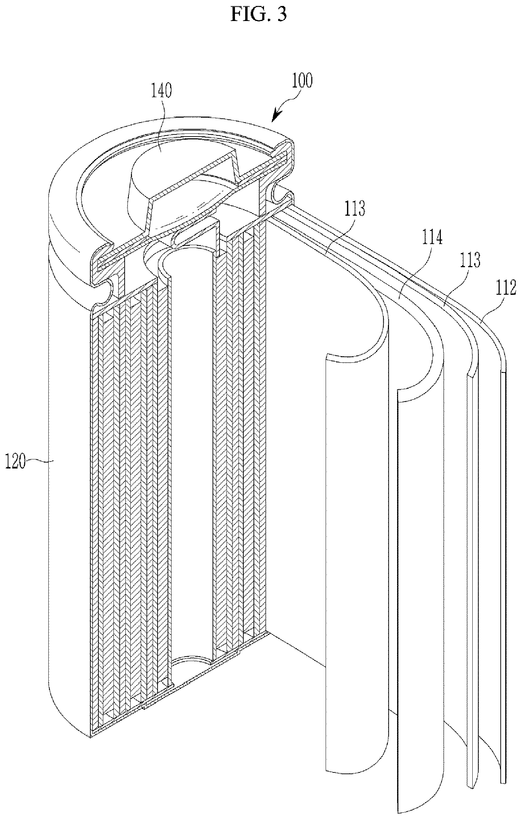

FIG. 3 is an exploded perspective view of a rechargeable lithium battery according to an embodiment. Referring to FIG. 3, a rechargeable lithium battery 100 according to an embodiment includes a battery cell including a negative electrode 112, a positive electrode 114 facing the negative electrode 112, a separator 113 disposed between the negative electrode 112 and the positive electrode 114, and an electrolyte solution (not shown) immersed in the negative electrode 112, positive electrode 114, and separator 113, a battery case 120 housing the battery cell, and a sealing member 140 sealing the battery case 120.

[Negative Electrode]

The negative electrode 112 includes a negative electrode current collector and a negative electrode active material layer formed on the negative electrode current collector.

The negative electrode current collector may use copper, gold, nickel, a copper alloy, and the like, but is not limited thereto.

The negative electrode active material layer may include a negative electrode active material, a binder, and optionally a conductive material. The negative electrode active material may be a material that reversibly intercalates/deintercalates lithium ions, a lithium metal, a lithium metal alloy, a material capable of doping and dedoping lithium, a transition metal oxide, or a combination thereof.

The material that reversibly intercalates/deintercalates lithium ions may be a carbon material which is any generally-used carbon-based negative electrode active material, and examples thereof may be crystalline carbon, amorphous carbon, or a combination thereof. Examples of the crystalline carbon may be may be graphite such as irregular-shape, sheet-shape, flake, spherical shape or fiber-shaped natural graphite or artificial graphite. Examples of the amorphous carbon may be soft carbon or hard carbon, a mesophase pitch carbonized product, fired coke, and the like. The lithium metal alloy may be an alloy of lithium and a metal selected from Na, K, Rb, Cs, Fr, Be, Mg, Ca, Sr, Si, Sb, Pb, In, Zn, Ba, Ra, Ge, Al, and Sn (e.g. Na, K, Rb, Cs, Be, Mg, Ca, Sr, Si, Sb, Pb, In, Zn, Ba, Ge, Al, and Sn). The material capable of doping and dedoping lithium may be Si, $SiO_x$ (0<x<2), a Si-C composite, a Si-Y alloy, Sn, $SnO_2$, a Sn-C composite, a Sn-Y alloy, and the like, and at least one of these may be mixed with $SiO_2$. Specific examples of the element Y may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po (e.g. Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Rh, Ir, Pd, Pt, Cu, Ag, Au, Zn, Cd, B, Al, Ga, Sn, In, Tl, Ge, P, As, Sb, Bi, S, Se, Te, Po), and a combination thereof. The transition metal oxide may be vanadium oxide, lithium vanadium oxide, and the like.

The binder and the conductive material used in the negative electrode 112 may be the same as the binder and conductive material of the positive electrode 114.

The positive electrode 114 and the negative electrode 112 may be manufactured by mixing each active material composition including each active material and a binder, and optionally a conductive material in a solvent, and coating the active material composition on each current collector. Herein, the solvent may be N-methylpyrrolidone, and the like, but is not limited thereto. The electrode manufacturing method is well known, and thus is not described in detail in the present specification.

[Electrolyte]

The electrolyte may include an organic solvent and a lithium salt.

The organic solvent serves as a medium for transmitting ions taking part in the electrochemical reaction of a battery. Specific examples thereof may be selected from a carbonate-based solvent, an ester-based solvent, an ether-based solvent, a ketone-based solvent, an alcohol-based solvent, and an aprotic solvent. The carbonate-based solvent may be dimethyl carbonate, diethyl carbonate, dipropyl carbonate, methylpropyl carbonate, ethylpropyl carbonate, methylethyl carbonate, ethylene carbonate, propylene carbonate, butylene carbonate, and the like, and the ester-based solvent may be methyl acetate, ethyl acetate, n-propyl acetate, 1,1-dimethylethyl acetate, methylpropionate, ethylpropionate, γ-butyrolactone, decanolide, valerolactone, mevalonolactone, caprolactone, and the like. The ether-based solvent may be dibutyl ether, tetraglyme, diglyme, dimethoxyethane, 2-methyltetrahydrofuran, tetrahydrofuran, and the like, and the ketone-based solvent may be cyclohexanone, and the like. The alcohol-based solvent may be ethanol, isopropyl alcohol, and the like, and the aprotic solvent may be nitriles such as R-CN (R is a C2 to C20 linear or branched or cyclic hydrocarbon group, a double bond, an aromatic ring, or an ether bond), and the like, amides such as dimethyl formamide, dioxolanes such as 1,3-dioxolane, sulfolanes, and the like.

The organic solvent may be used alone or in a mixture of two or more, and when the organic solvent is used in a mixture of two or more, the mixture ratio may be controlled in accordance with a desirable cell performance.

The lithium salt is dissolved in an organic solvent, supplies lithium ions in a battery, basically operates the rechargeable lithium battery, and improves lithium ion transportation between positive and negative electrodes therein. Examples of the lithium salt may include $LiPF_6$, $LiBF_4$, $LiSbF_6$, $LiAsF_6$, $LiN(SO_3C_2F_5)_2$, $LiN(CF_3SO_2)_2$, $LiC_4F_9SO_3$, $LiClO_4$, $LiAlO_2$, $LiAlCl_4$, $LiN(C_xF_{2x+1}SO_2)(C_yF_{2y+i}SO_2)$, wherein x and y are natural numbers, LiCl, LiI, $LiB(C_2O_4)_2$, or a combination thereof, but is not limited thereto.

The lithium salt may be used in a concentration ranging from about 0.1 M to about 2.0 M. When the lithium salt is included within the above concentration range, an electrolyte solution may have excellent performance and lithium ion mobility due to optimal conductivity and viscosity of the electrolyte solution.

[Separator]

The separator may be, for example polyolefin, polyester, polytetrafluoroethylene (PTFE), polyacetal, polyamide, polyimide, polycarbonate, polyetheretherketone, polyaryletherketone, polyetherimide, polyamideimide, polybenzimidazole, polyethersulfone, polyphenyleneoxide, a cyclic olefin copolymer, polyphenylenesulfide, polyethylenenaphthalene, a glass fiber, or a combination thereof, but is not limited thereto.

Examples of the polyolefin may be polyethylene, polypropylene, and the like, and examples of the polyester may be polyethyleneterephthalate, polybutyleneterephthalate, and the like.

In addition, the separator may be a porous substrate in the form of a nonwoven fabric or a woven fabric, and may have a single layer or multilayer structure. For example, the substrate may be a polyethylene single layer, a polypropylene single layer, a polyethylene/polypropylene double layer, a polypropylene/polyethylene/polypropylene triple layer, a polyethylene/polypropylene/polyethylene triple layer, and the like.

A thickness of the separator may be about 1 $\mu$m to about 40 $\mu$m, for example, about 1 $\mu$m to about 30 $\mu$m, about 1 $\mu$m to about 20 $\mu$m, about 5 $\mu$m to about 15 $\mu$m, or about 5 $\mu$m to about 10 $\mu$m. When the thickness of the separator is within the range, short-circuit between positive and negative electrodes may be prevented without increasing internal resistance of a battery.

Examples and comparative examples of the present invention are described below. The following examples are only examples of the present invention, but the present invention is not limited to the following examples.

**Example 1**

**(1) Preparation of Composition for Primer Layer**

A composition for a primer layer was prepared by mixing 70 parts by weight of carbon nanotubes (CNT) and 30 parts by weight of a dispersant. Herein, the carbon nanotubes had a length of 30 $\mu$m and crystallinity (Id/Ig) of 0.85, which was measured through Raman spectrum analysis. In addition, as the dispersant, a mixture of hydrogenated nitrile butadiene rubber (Mv: 20 to 40 g/mol) and polyvinylpyrrolidone (Mw: 400,000 to 1,300,000 g/mol) mixed in a weight ratio of 8:2 was used.

**(2) Manufacture of Positive Electrode Current Collector**

An aluminium foil (thickness: 12 $\mu$m) was used as a substrate, and the composition for a primer layer was coated thereon with a gravure roll coater and dried at room temperature, providing a 1 $\mu$m-thick primer layer. Through this, a positive electrode current collector including the aluminium foil (substrate) and the primer layer thereon was obtained.

**(3) Manufacture of Positive Electrode**

97 wt% of $LiNi_{0.91}Co_{0.07}Al_{0.02}O_2$ as a positive electrode active material, 1 wt% of a conductive material prepared by mixing carbon nanotube and nano carbon, and 2 wt% of polyvinylidene fluoride were mixed, preparing positive electrode active material slurry. The positive electrode active material slurry was coated on the positive electrode current collector and then, dried and compressed, obtaining a positive electrode including the positive electrode current collector and a positive electrode active material layer thereon.

Herein, the positive electrode active material layer had a loading amount of about 40 mg/cm$^2$. In addition, the primer layer had a thickness ratio of 1% based on 100% of a total thickness of the positive electrode.

**(4) Manufacture of Rechargeable Lithium Battery Cell**

A 2032 type rechargeable lithium battery cell (coin half cell) was manufactured by winding the positive electrode into a circle shape with a diameter of 12 mm and then, using it along with a lithium metal as a counter electrode and a polypropylene separator. Herein, an electrolyte solution was prepared by using a mixed solvent of ethylenecarbonate, diethylenecarbonate, and fluoroethylenecarbonate mixed in a weight ratio of 2:6:2 and dissolving 1.3 M $LiPF_6$ therein.

**Examples 2 to 5**

Each positive electrode current collector, positive electrode, and rechargeable lithium battery cell according to Examples 2 to 5 was manufactured in the same manner as in Example 1 except that the length and crystallinity of the carbon nanotubes; the weight ratio of the carbon nanotubes and the dispersant were changed as shown in Table 1.

**Comparative Example 1**

A positive electrode and a rechargeable lithium battery cell were manufactured in the same manner as in Example 1 except that the aluminium foil itself was used as a positive electrode current collector.

**Comparative Example 2**

A composition for a primer layer was prepared by mixing 90 parts by weight of acetylene black (AB) with a particle diameter (D50) of 50 $\mu$m and 10 parts by weight of a dispersant. A positive electrode current collector, a positive electrode, and a rechargeable lithium battery cell were manufactured in the same manner as in Example 1 except for the above.

**Comparative Example 3 to 6**

Each positive electrode current collector, positive electrode, and rechargeable lithium battery cell according to Comparative Examples 3 to 6 was manufactured in the same manner as in Example 1 except that the length and crystallinity of the carbon nanotubes; the weight ratio of the carbon nanotubes and the dispersant were changed as shown in Table 1.

(Table 1)

| | AB | CNT | | Primer layer | | |
|---|---|---|---|---|---|---|
| | D50 particle diameter (nm) | Length ($\mu$m) | Crysta llinity (Id/Ig) | Formulation (weight ratio) | Thickn ess ($\mu$m) | Thickness ratio (%) in positive electrode |
| Comp. Ex. 1 | - | - | - | - | - | - |
| Comp. Ex. 2 | 50nm | - | - | AB : a dispersant = 90 : 10 | 1 | 1 |
| Comp. Ex. 3 | - | 5 | 0.7 | CNT : a dispersant = 80 : 20 | 1 | 1 |
| Comp. Ex. 4 | - | 10 | 0.72 | CNT : a dispersant = 80 : 20 | 1 | 1 |
| Comp. Ex. 5 | - | 20 | 0.74 | CNT : a dispersant = 80 : 20 | 1 | 1 |
| Ex. 1 | - | 30 | 0.85 | CNT : a dispersant = 70 : 30 | 1 | 1 |
| Ex. 2 | - | 50 | 0.98 | CNT : a dispersant = 70 : 30 | 1 | 1 |
| Ex. 3 | - | 100 | 1.1 | CNT : a dispersant = 70 : 30 | 1 | 1 |
| Ex. 4 | - | 200 | 1.15 | CNT : a dispersant = 70 : 30 | 1 | 1 |
| Ex. 5 | - | 200 | 1.15 | CNT : a dispersant = 60 : 40 | 1 | 1 |
| Comp. Ex. 6 | - | 250 | 1.6 | Positive electrode cannot be manufactured | | |

**Evaluation Example 1: Characteristic Evaluation of Positive Electrode Current Collector**

The positive electrode current collectors according to Examples 1 to 5 and Comparative Examples 1 to 6 were evaluated as follows.

(1) Tensile strength: A specimen was prepared by cutting each positive electrode current collector into a size of 10 mm*200 mm to measure tensile strength at room temperature according to ASTM D-638 by using a universal test machine (UTM). Herein, the universal test machine (UTM) was set at a crosshead speed of 300 mm/min and set at a gauge length of 100 mm. Herein, the tensile strength was 10 P/W*t, P was stress (kgf) at break, W was a specimen width (mm), and t was a specimen thickness (mm). Table 2 shows measurements of the tensile strength.
(2) Elongation: A specimen was prepared by cutting each positive electrode current collector into a size of 10 mm*200 mm to measure elongation by using UTM equipment. Herein, the elongation (%) is $l-l_0/l*100$, $l_0$ was an initial distance between jigs (JIG), and $l$ was a distance after the cutting between the jigs (JIG). Table 2 shows measurements of the elongation.

**Evaluation Example 2: Characteristic Evaluation of Positive Electrode**

The positive electrodes of Examples 1 to 5 and Comparative Examples 1 to 6 were evaluated as follows.

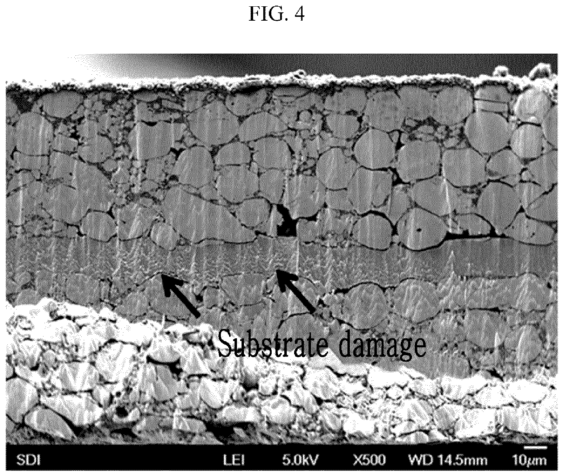

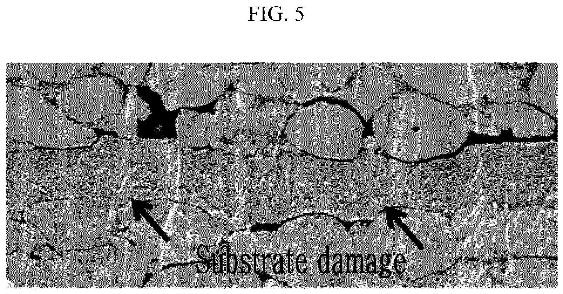

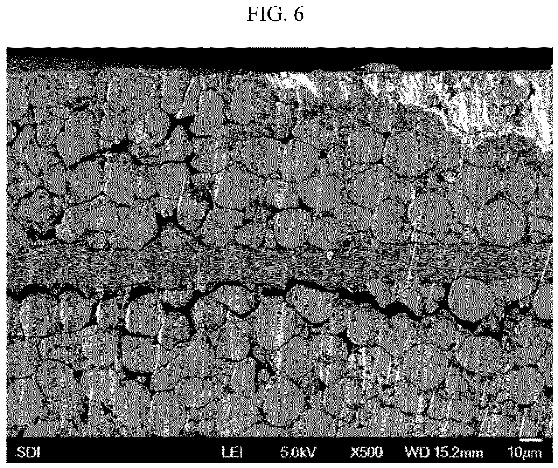

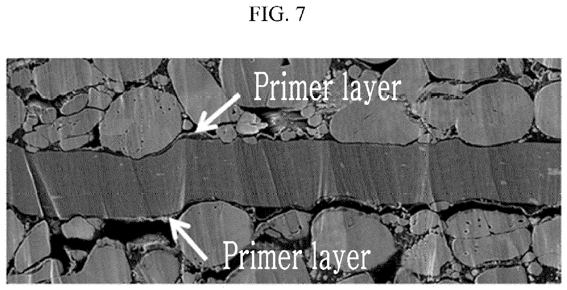

(1) Resistance: The positive electrodes were respectively prepared as a circular specimen with a radius of about 1cm and an area of about 3.14 cm$^2$ to measure resistivity in the thickness direction by using a resistivity meter (CIS CO., LTD.). Table 2 shows measurements of the resistance.
(2) Positive electrode density: 3 g of positive electrode active material powder was put in a mold with an area of 1.2 cm$^2$ and packed under a pressure of 2.5 ton/cm$^2$ to measure density, and the results are shown in Table 2.
(3) SEM: The positive electrodes were respectively cut in the vertical direction with the substrate surface and then, examined with a FE-SEM (Hitachi SU 8030) equipment. FIG. 4 is an SEM image of a cut surface of the positive electrode of Comparative Example 2, and FIG. 5 is a 1.5-fold magnified view of FIG. 4. FIG. 6 is an SEM image of a cross-section of the anode of Example 2, and FIG. 7 is a 1.5-fold magnified view of FIG. 6.

(Table 2)

|  | Positive electrode current collector | | Positive electrode | |
| --- | --- | --- | --- | --- |
|  | Tensile strength (N/mm$^2$) | Elongatio n (%) | Resistance ($\Omega$.M) | Positive electrode density (g/cc) |
| Comp. Ex. 1 | 298.5 | 1.374 | 13.1 | 3.55 |
| Comp. Ex. 2 | 302.9 | 1.4 | 10.2 | 3.55 |
| Comp. Ex. 3 | 316.7 | 1.51 | 9.5 | 3.6 |
| Comp. Ex. 4 | 317.1 | 1.48 | 9.4 | 3.6 |
| Comp. Ex. 5 | 320.2 | 1.52 | 9.2 | 3.6 |
| Ex. 1 | 321.8 | 1.53 | 9 | 3.65 |
| Ex. 2 | 330.3 | 1.57 | 8.6 | 3.7 |
| Ex. 3 | 330.6 | 1.58 | 8.5 | 3.7 |
| Ex. 4 | 331.2 | 1.68 | 8.3 | 3.7 |
| Ex. 5 | 331.1 | 1.71 | 8.5 | 3.7 |
| Comp. Ex. 6 | Positive electrode cannot be manufactured | | | |

Referring to Tables 1 and 2, the positive electrode current collectors for a rechargeable lithium battery cell according to Examples 1 to 5 exhibited excellent effects of improving mechanical properties, reducing resistance, and increasing density, compared with the positive electrode current collectors for a rechargeable lithium battery cell according to Comparative Examples 1 to 5. The positive electrode of Comparative Example 6 was impossible to manufacture. Specifically, the positive electrode current collectors according to Examples 1 to 5, which used carbon nanotubes having a length of about 30 to about 200 $\mu$m, turned out to have increased mechanical properties (tensile strength, elongation, and the like) as well as significantly reduced resistance, compared with a case of using carbon nanotubes with a length of less than 30 $\mu$m.

These effects were achieved, even if the primer layer was formed to be thin, that is, less than or equal to 1 $\mu$m thick (however, greater than 0 $\mu$m). Accordingly, when the positive electrode current collector for a rechargeable lithium battery cell according to an embodiment was used, instead of providing the primer layer to have a thin thickness of less than or equal to 1 $\mu$m thick, a positive electrode active material layer was formed thereon to be sufficiently thick, realizing a high-capacity positive electrode.

On the other hand, in the positive electrode current collectors according to Examples 1 to 5, the carbon nanotubes were horizontally aligned on the surface of the current collector due to the method of providing the primer layer. Herein, compared with the vertical alignment of the carbon nanotubes with the current surface, even though the primer layer was formed to be thin, a positive electrode with low resistance and high strength was realized, and accordingly, the positive electrode active material layer was formed to be sufficiently thick as much, realizing a high-capacity positive electrode.

Accordingly, the positive electrode current collector for a rechargeable lithium battery cell according to an embodiment, which were represented by Examples 1 to 5, reduced resistance and increased mechanical properties as well as increased density of the positive electrode, contributing to electrochemical characteristics of the rechargeable lithium battery cell.

While this disclosure has been described in connection with what is presently considered to be practical example embodiments, it is to be understood that the invention is not limited to the disclosed embodiments. On the contrary, it is intended to cover various modifications and equivalent arrangements included within the scope of the appended claims.

**<Description of Symbols>**

1: substrate
2: primer layer
3: positive electrode active material layer
100: rechargeable lithium battery
112: negative electrode
113: separator
114: positive electrode
120: battery case
140: sealing member

**Claims**

1.  A positive electrode current collector for a rechargeable lithium battery, comprising

    a substrate and a primer layer on the substrate,
    wherein the primer layer includes carbon nanotubes having a length of about 30 $\mu$m to about 200 $\mu$m, and
    a thickness of the primer layer is less than or equal to about 1 $\mu$m and greater than 0 $\mu$m.

2.  The positive electrode current collector of claim 1, wherein
    the substrate is an aluminium foil.

3.  The positive electrode current collector of claim 1 or claim 2, wherein
    the carbon nanotube has crystallinity (Id/Ig) of about 0.45 to about 1.6.

4.  The positive electrode current collector of any one of claims 1 to 3, wherein
    the carbon nanotubes are arranged in a horizontal direction in relation to the surface of the substrate.

5.  The positive electrode current collector of any one of claims 1 to 4, wherein
    the primer layer further includes a dispersant.

6.  The positive electrode current collector of claim 5, wherein
    the dispersant includes at least one selected from a hydrogenated nitrile butadiene rubber, polyvinylpyrrolidone, polyvinylidene fluoride, a styrene-butadiene rubber, an acrylated styrene-butadiene rubber, an organic compound having a basic functional group, and an amine-based compound.

7.  The positive electrode current collector of claim 5 or claim 6, wherein
    a content of the dispersant in the total amount of the primer layer is less than or equal to about 50 wt% and greater than 0 wt%.

8.  The positive electrode current collector of any one of claims 5 to 7, wherein
    a weight ratio of the carbon nanotubes and the dispersant is about 95:5 to about 50:50.

9.  A positive electrode for a rechargeable lithium battery, comprising

    the positive electrode current collector of any one of claims 1 to 8; and
    a positive electrode active material layer on the primer layer.

10. The positive electrode of claim 9, wherein
    a thickness of the primer layer is less than or equal to about 3% and greater than 0% of the total thickness of the positive electrode.

11. The positive electrode of claim 9 or claim 10, wherein
    the positive electrode active material layer includes a composite oxide of cobalt, manganese, nickel, aluminium, iron, or a combination thereof and lithium:

12. The positive electrode of any one of claims 9 to 11, wherein
    the positive electrode active material layer includes a conductive material.

13. The positive electrode of any one of claims 9 to 12, wherein
    the positive electrode active material layer includes a binder.

14. The positive electrode of any one of claims 9 to 13, wherein
    the positive electrode active material layer has a density of greater than or equal to about 3.6 g/cc.

15. A rechargeable lithium battery, comprising

    the positive electrode of any one of claims 9 to 14;
    a negative electrode; and
    an electrolyte.

FIG. 1

FIG. 2

FIG. 3

FIG. 4

FIG. 5

FIG. 6

FIG. 7

Europäisches
Patentamt

European
Patent Office

Office européen
des brevets

# EUROPEAN SEARCH REPORT

Application Number

EP 23 18 3208

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/106591 A1 (SANYO ELECTRIC CO [JP]) 3 June 2021 (2021-06-03) * paragraphs [0021] - [0032], [0039] - [0041]; claims 1-5; figures 2,3; examples 1-7; table 1 * | 1-15 | INV. H01M4/66 H01M4/131 H01M4/525 H01M10/0525 |
| A | US 2014/127586 A1 (KAMIZONO TAKESHI [JP] ET AL) 8 May 2014 (2014-05-08) * paragraphs [0014] - [0017], [0019] - [0023], [0039] - [0045], [0050] - [0051]; claims 10,14; example 1 * | 1-15 | ADD. H01M4/62 |
| A | CN 112 158 827 A (UNIV BEIJING SCIENCE & TECH) 1 January 2021 (2021-01-01) * Abstract, paragraphs [0007], [0028] * | 1-15 | |
| A | JP 6 889409 B2 (TOYOTA MOTOR CORP) 18 June 2021 (2021-06-18) * paragraphs [0022] - [0023], [0035] - [0036], [0058] * | 1-15 | |

TECHNICAL FIELDS
SEARCHED (IPC)

H01M

The present search report has been drawn up for all claims

| Place of search | Date of completion of the search | Examiner |
|---|---|---|
| Munich | 17 May 2024 | Girard, Gaëtan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 23 18 3208

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-2024

| Patent document cited in search report | | Publication date | Patent family member(s) | | Publication date |
|---|---|---|---|---|---|
| WO 2021106591 | A1 | 03-06-2021 | CN | 114730853 A | 08-07-2022 |
| | | | JP | WO2021106591 A1 | 03-06-2021 |
| | | | US | 2022416224 A1 | 29-12-2022 |
| | | | WO | 2021106591 A1 | 03-06-2021 |
| US 2014127586 | A1 | 08-05-2014 | DE | 112012002515 T5 | 28-05-2014 |
| | | | JP | 5757173 B2 | 29-07-2015 |
| | | | JP | 2013001612 A | 07-01-2013 |
| | | | US | 2014127586 A1 | 08-05-2014 |
| | | | WO | 2012172809 A1 | 20-12-2012 |
| CN 112158827 | A | 01-01-2021 | NONE | | |
| JP 6889409 | B2 | 18-06-2021 | JP | 6889409 B2 | 18-06-2021 |
| | | | JP | 2019145306 A | 29-08-2019 |

EPO FORM P0459

For more details about this annex : see Official Journal of the European Patent Office, No. 12/82